# EUROPÄISCHE PATENTSCHRIFT

(11) **EP 1 376 083 B1**
(45) Veröffentlichungstag und Bekanntmachung des Hinweises auf die Patenterteilung: **18.08.2010**
(21) Anmeldenummer: 03014257.4
(22) Anmeldetag: 25.06.2003
(51) Int. Cl.: G01K 11/06, G01K 11/12, B29C 65/02, B29C 65/34

(54) **Schweissfitting mit einem Schweissindikator**
Welding socket with a fusion indicator
Manchon de soudage avec un indicateur de fusion

(30) Priorität: 25.06.2002 DE 10228417
(43) Veröffentlichungstag der Anmeldung: 02.01.2004
(73) Patentinhaber: Friatec Aktiengesellschaft, 68229 Mannheim (DE)
(72) Erfinder: Maier, Fabian, 67368 Westheim (DE); Fastanz, Mathias, 68199 Mannheim (DE)
(74) Vertreter: Tönhardt, Marion

(56) Entgegenhaltungen:
- WO-A-90/13411
- PATENT ABSTRACTS OF JAPAN Bd. 016, Nr. 103 (M-1221), 13. März 1992 (1992-03-13) -& JP 03 277894 A (SEKISUI CHEM CO LTD), 9. Dezember 1991 (1991-12-09)

## Beschreibung

Die Erfindung bezieht sich auf ein Schweißfitting mit einem Schweißindikator gemäß den im Oberbegriff des Patentanspruchs 1 angegebenen Merkmale.

Derartige Schweißindikatoren für Schweißfittings sind beispielsweise aus der DE 40 18 396 C1, der EP 0 376 773 A2 oder der EP 0 257 283 A1 bekannt, wobei die Schweißindikatoren nach dem Prinzip der Schmelzenbildung arbeiten. Die Schweißfittings können als Elektroschweißmuffen, Sattelstücke, Anbohrarmaturen oder sonstige Formteile ausgebildet sein und enthalten ein insbesondere elektrisches Heizelement zur Erwärmung des Kunststoffes des Fittingkörpers ebenso wie des mit diesem zu verbindenden Bauteils, wie insbesondere eines Rohres. Bei der Herstellung der Schweißverbindung tritt ein kleiner Teil des erwärmten, plastisch gewordenen Kunststoffmaterials, kurz Schmelze genannt, direkt durch eine Ausnehmung oder Bohrung des Fittings nach außen oder es wird durch den Druck der Schmelze ein Bauteil, wie beispielsweise ein Stift oder dergleichen bewegt und somit die Durchführung und der ordnungsgemäße Abschluss der Verschweißung visuell zur Anzeige gebracht. Bei derartigen Schweißindikatoren wird der Schmelzedruck gezielt genutzt, wobei folgende Nachteile auftreten können:
- Schmelzdruckabfall im Bereich des Schweißindikators,
- Gefahr von Lunkern,
- Drahtverschiebungen / Kurzschluß
- unterschiedliche Auslöse-Intensitäten
- komplizierte Bauformen.

Die WO 90/13411 offenbart ein Schweißindikatorelement eines Schweißfittings, welches eine Metallbox mit einem nicht expandierten, schäumbaren Polystyrol umfaßt. Wenn während des Schweißens die Temperatur ansteigt, dehnt sich das Polystyrol durch Wärmeleitung aus, bewegt sich aus der Box heraus und bildet ein Anzeigeelement.

Die JP03-277894 A offenbart ein Schweißfitting, bei dem das Austreten des noch nicht expandierten Indikatormaterials durch einen Kolben verhindert wird.

Hiervon ausgehend liegt der Erfindung die Aufgabe zugrunde, mit einem geringen konstruktiven Aufwand die aufgezeigten Nachteile zu vermeiden und ein Schweißfitting mit einem funktionssicheren Schweißindikator zu schaffen. Der Schweißindikator soll mit einem geringen Aufwand herstellbar sein und eine einfache Integration in das Fitting ermöglichen.

Die Lösung dieser Aufgabe erfolgt gemäß der im Patentanspruch 1 angegebenen Merkmale.

Mit dem erfindungsgemäßen Schweißindikator wird anstelle des Schmelzedrucks die Schweißtemperatur und die beim Erreichen und/oder Überschreiten derselben erfolgende Volumenexpansion als Indikatorparameter verwendet. Da eine Mindestschweißtemperatur erforderlich ist, wird diese als Indikatorparameter für eine erfolgte Schweißung genutzt, ohne dem System den erforderlichen Schweißdruck zu entziehen. Die Nutzung oder die Dokumentation des Temperaturverlaufes erfolgt in vorteilhafter Weise durch Einbringen des zusätzlichen Materials, welches bei Erwärmung expandiert und/oder bei Überschreitung einer vorgegebenen Temperatur in vorteilhafter Weise irreversibel verfärbt. Es sei ausdrücklich festgehalten, dass erfindungsgemäß nicht der Kunststoff des Fittingkörpers Bestandteil des Schweißindikators ist oder denselben bildet, sondern das zusätzliche Material, welches zweckmäßig in einer Ausnehmung des Fittingkörpers eingebracht ist. Durch Einbringung des vorgeschlagenen, Temperatur geführten Materials in eine im Bereich der Außenwand des Fittings bzw. des Fittingkörpers vorgesehene Ausnehmung oder Bohrung startet bei Erreichen der erfindungsgemäß vorgegebenen Temperatur, insbesondere der Schmelztemperatur des Kunststoffs des Fittingkörpers, die Volumenänderung dieses Materials. Als expandierendes Material kann der Schweißindikator insbesondere Intumeszenzmaterial oder Wachse enthalten oder aus solchen Materialien bestehen.

Das Ansprechverhalten des Schweißindikators wird erfindungsgemäß durch die Einwirkung der Schweißtemperatur in Kombination mit einer Volumenexpansion realisiert. Das bei Erreichen einer vorgegebenen Temperatur, welche auf die Schweißtemperatur des Kunststoffs des Fittingkörpers und/oder des mit diesem zu verbindenden Bauteils abgestimmt ist, expandierende bzw. aufschäumende Material stellt sicher, dass der Schweißzone für die Anzeige und/oder Funktion des Schweißindikators keine plastifizierte Schmelze entzogen wird. Hierdurch können Lunker-Bildung, unzureichende Qualität der Schweißzone und ein unkontrollierter Schmelzenaustritt am Indikator mit hoher Sicherheit vermieden werden. Bei Erreichen der vorgegebenen und/oder erforderlichen Schmelzetemperatur startet die erhebliche Volumenexpansion des erfindungsgemäß im Schweißindikator zum Einsatz gelangenden Materials. Die Volumenänderung des zusätzlichen Materials ist bevorzugt um einen vorgegebenen Faktor größer als die Volumenänderung des Kunststoffes. Dieser Faktor ist bevorzugt wenigstens 1,2 und insbesondere wenigstens 1,5 groß. Bei der Volumenexpansion des erfindungsgemäß zum Einsatz gelangenden Materials, welches nachfolgend auch als Schaummaterial oder Quellmaterial bezeichnet wird, wird durch diese Reaktion ein Expansionsdruck erzeugt, welcher in bevorzugter Weise zumindest näherungsweise die Wirkung des Schmelzedrucks besitzt oder übertrifft. Somit können die bekannten Anzeigemechanismen zum Einsatz gelangen, ohne dass die Eingangs erläuterten Nachteile in Kauf genommen werden müssen.

Das zusätzliche Material ist in einer der Schweißzone zugewandten Kammer, insbesondere der Hülse, angeordnet. Zwischen der Schweißzone und der das genannte zusätzliche Material enthaltenden Kammer ist ein vorgegebener Abstand vorhanden. Dieser Abstand ist erfindungsgemäß derart vorgegeben, dass während des Schweißens keine Schmelze austreten kann.

Besondere Ausgestaltungen und Weiterbildungen der Erfindung sind in den Unteransprüchen sowie der nachfolgenden Beschreibung angegeben.

Die Erfindung wird nachfolgend anhand der in der Zeichnung dargestellten besonderen Ausführungsbeispiele näher erläutert, ohne dass insoweit eine Beschränkung erfolgt. Es zeigen:
- Fig. 1, 2: in einem Längsschnitt und in einer seitlichen Ansicht eine erste Ausführungsform des als Quellindikator ausgebildeten Schweißindikators,
- Fig. 3: den Schweißindikator gemäß Fig. 1 nach der Verschweißung,
- Fig. 4, 5: den Schweißindikator gemäß Fig. 1 während und nach der Montage in einen Fittingkörper, und
- Fig. 6 - 9: eine weitere Ausführungsform, eines Schweißindikators und eines Schweißfittings mit diesem Schweißindikator.

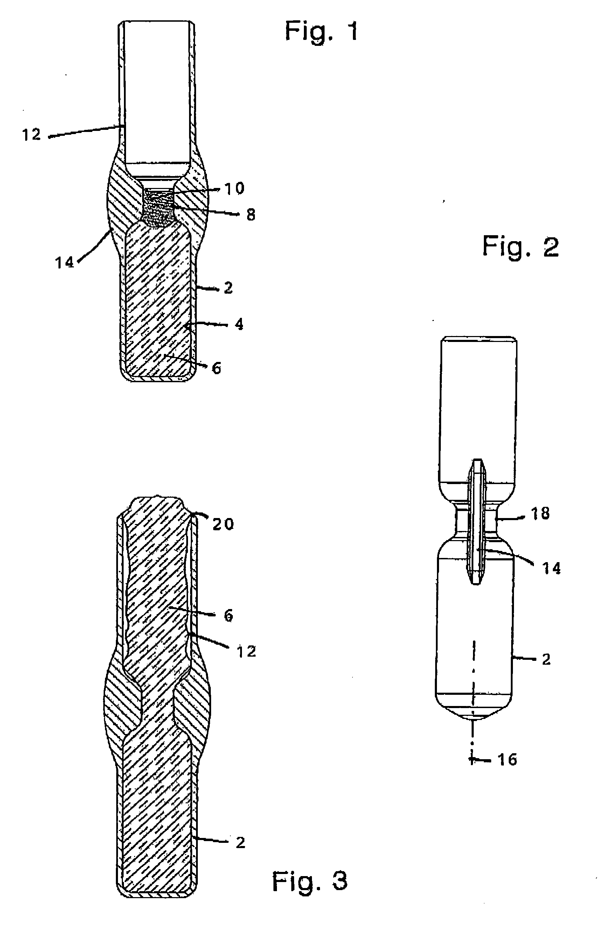

Der in Fig. 1 in einem axialen Schnitt dargestellte Schweißindikator enthält eine Hülse 2 mit einer Kammer 4, in welcher das zusätzliche Material 6 vor der Durchführung einer Schweißung angeordnet ist. Die Hülse enthält anschließend an die Kammer 4 eine Verjüngung 8, in der sich ein Verschlussstopfen 10 befindet und die im Vergleich mit der Kammer 4 eine reduzierte Querschnittsfläche aufweist. Infolge der Verjüngung 8 an der Austrittsöffnung der Kammer 4 entsteht bei Erwärmung, insbesondere beim Erreichen der vorgegebenen Temperatur und/oder der Schmelztemperatur des Kunststoffs eines Fittingskörpers ein definierter Staudruck, wodurch eine sehr ergiebige Expansion des Materials 6 gewährleistet ist. Die Hülse 2 besteht in vorteilhafter Weise aus Metall, wie Kupfer, Messing oder Aluminium, wodurch eine gute Wärmeleitung sichergestellt ist. Mittels des Verschlussstopfens 10 wird das Material 6 zunächst sicher in der Kammer 4 gehalten. Der Verschlussstopfen 10 besteht zweckmäßig aus einem bei Erwärmung schmelzbaren und/oder löslichen Material, wie insbesondere Wachs oder enthält solches. Bei Erreichen der für die Expansion des Materials 6 vorgegebenen Temperatur hat der Verschlussstopfen 10 den Weg für das expandierende Material 6 freigegeben. Im Anschluss an die Verjüngung 8 enthält die Hülse 2 eine zweite Kammer oder ein Steigrohr 12 für die Aufnahme der Expansionsmasse. Der Verschlussstopfen 10 und das zusätzliche Material 6, und zwar insbesondere nach dessen Expandieren, besitzen in vorteilhafter Weise unterschiedliche Farben. So kann der Verschlussstopfen beispielsweise weiß sein, während das zusätzliche Material 6 rot ist, so dass nach dem Schweißen das im Steigrohr 12 gelangte expandierte zusätzliche Material aufgrund der roten Farbe eindeutig zu erkennen und somit eine sichere visuelle Kontrolle ermöglicht ist. Im Bereich der Verjüngung 8 besitzt die Hülse 2 außen bevorzugt zwei seitliche Stege 14, welche eine gute Stabilität sicherstellen und/oder eine gute Verankerung und Arretierung des Schweißindikators in einer zugeordneten Ausnehmung oder Bohrung eines Muffenkörpers gewährleisten.

Fig. 2 zeigt die Hülse 2 in einer seitlichen Ansicht, und zwar im Vergleich zu Fig. 1 in einer bezüglich der Längsachse 16 um 90° gedrehten Position, wobei der Boden der Hülse 2 geringfügig modifiziert, konisch ausgebildet ist. Wie ersichtlich, ist im Bereich der im Inneren der Hülse 2 vorhandenen Verjüngung die Hülse 2 außen mit einer Einschnürung 18 versehen.

Fig. 3 zeigt den Schweißindikator nach dem Erreichen der vorgegebenen Temperatur, wobei nunmehr das zusätzliche Material 6 bzw. das aufgeschäumte Quellmittel sich auch in dem Steigrohr 12 der Hülse 2 befindet. Das aufgeschäumte Material oder Quellmittel verbleibt sicher und unverlierbar im Steigrohr 12, in dessen gemäß Zeichnung oberer Öffnung 20 das Quellmittel 6 gut sichtbar ist.

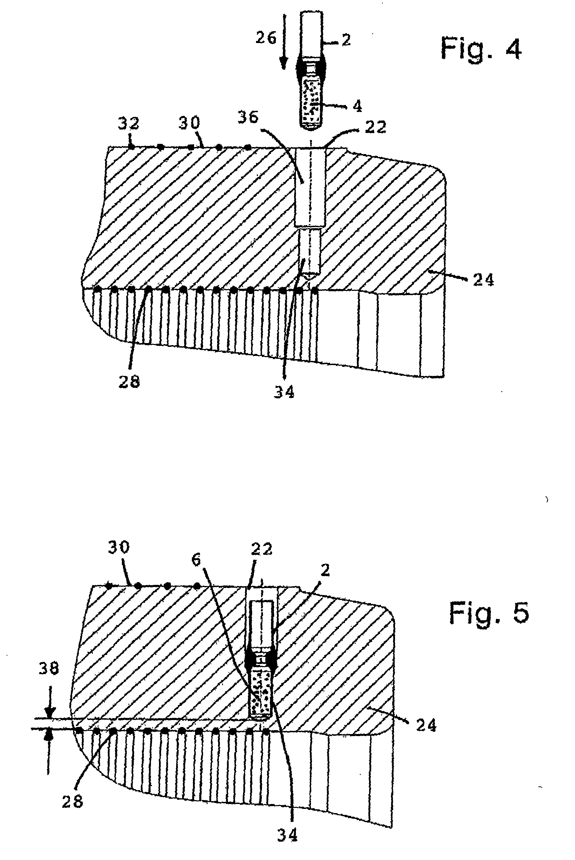

Fig. 4 zeigt die Montage des Schweißindikators, welcher in eine Ausnehmung oder Bohrung 22 eines teilweise dargestellten Fittingkörpers 24 in Richtung des Pfeiles 26 eingesetzt wird. Der Fittingkörper 24 ist Bestandteil eines als Elektroschweißmuffe ausgebildeten Fittings, in dessen Innenfläche ein als Heizwendel ausgebildetes Heizelement 28 angeordnet ist. In bekannter Weise wird in die derart ausgebildete Schweißmuffe das Ende eines zu verschweißenden Rohres aus Kunststoff eingeschoben und zur Herstellung der Schweißverbindung wird das Heizelement mit Strom beaufschlagt. An der Außenfläche 30 des Fittingkörpers 24 bzw. der Schweißmuffe ist eine Armierung 32 angeordnet. Die Ausnehmung bzw. Montagebohrung 22 des Fittingkörpers 24 ist bevorzugt gestuft ausgebildet, wobei der gemäß Zeichnung untere Teil 34, welcher bis in die Nähe bzw. den Bereich des Heizelements 28 reicht, zur Aufnahme des Hülsenteils mit der Kammer 4 vorgesehen und ausgebildet ist. Der der Außenfläche 30 zugewandte, gemäß Zeichnung obere Teil 36 der Ausnehmung 22 weist einen gegenüber dem unteren Teil 34 vergrößerten Durchmesser auf.

Fig. 5 zeigt den in den Fittingkörper 24 vollständig eingesetzten Schweißindikator. In vorteilhafter Weise ist der Schweißindikator bzw. die das Material 6 enthaltende Hülse 2 in den unteren Teil 34 fest eingepresst, so dass nicht nur eine zuverlässige mechanische Arretierung erreicht ist, sondern in besonders zweckmäßiger Weise eine optimierte Wärmeübertragung sichergestellt ist. Das gemäß Zeichnung untere, innere Ende der Hülse 2 weist zum Heizelement 28 einen vorgegebenen Abstand 38 auf. Der Abstand 38 ist erfindungsgemäß derart vorgegeben, dass ein Austreten der Schmelze durch die Ausnehmung 22 nach außen mit hoher Sicherheit unterbunden wird.

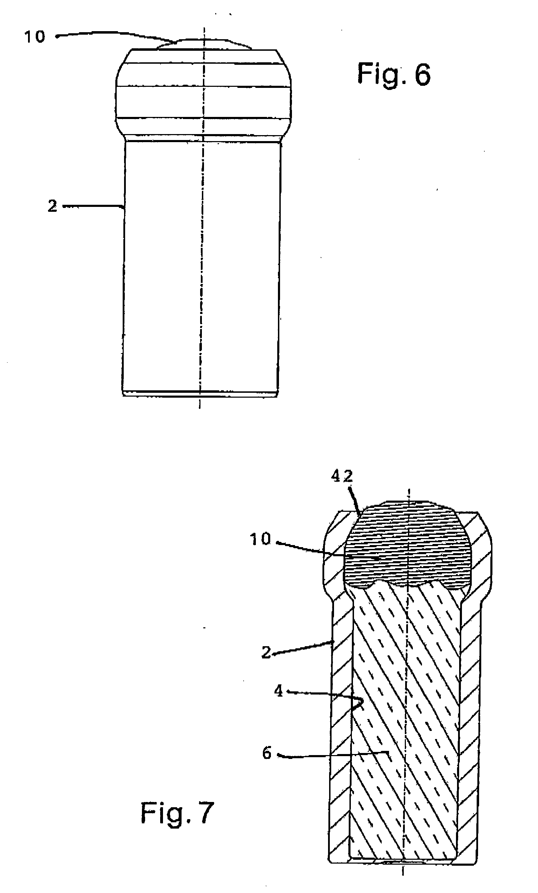

In Fig. 6 und 7 ist eine Ausführungsform des Schweißindikators dargestellt, dessen Funktion dem Schweißindikator gemäß Fig. 1 entspricht, welcher jedoch ohne Steigrohr ausgeführt ist. Das Material oder Quellmittel 6 ist in der inneren Kammer 4 der Hülse 2 angeordnet und die Öffnung 42 der Hülse 2 ist mittels des Verschlussstopfens 10 verschlossen.

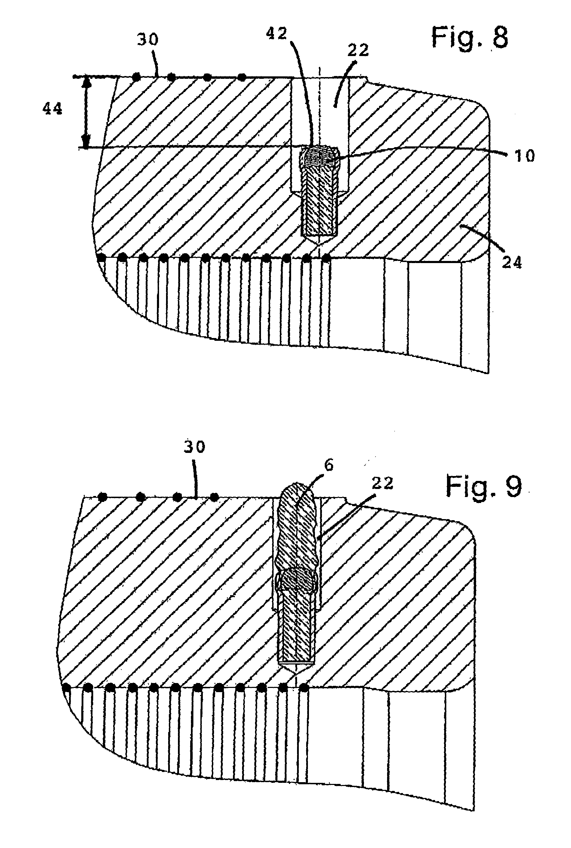

Wie aus Fig. 8 und 9 ersichtlich, ist der Schweißindikator in der Ausnehmung 22 des Fittingkörpers 24 derart angeordnet, dass der Verschlussstopfen 10 innerhalb des oberen Teils der Ausnehmung 22 in einem vorgegebenen Abstand 44 unterhalb der Außenfläche 30 des Fittingkörpers 24 liegt. Der Verschlussstopfen 10 besitzt zweckmäßig eine andere Farbe, beispielsweise weiß, als das expandierte Material 6, welches sich nach dem Schweißen in dem oberen Teil der Ausnehmung 22 befindet und welches beispielsweise die rote Farbe besitzt. Somit ist eindeutig die optische Kontrolle der ordnungsgemäßen Verschweißung ermöglicht. Die Menge des expandierenden zusätzlichen Materials 6 und die Dimension der Ausnehmung 22 sind bevorzugt derart vorgegeben, dass gemäß Fig. 9 nach der Verschweißung das expandierte Material 6 zumindest bis, zweckmäßig in einem vorgegebenen Betrag über die Außenfläche 30 vorsteht.

Es sei hier ausdrücklich festgehalten, dass die erfindungsgemäße Kombination des Schweißindikators mit einem Fitting nicht auf die Ausbildung desselben als eine Schweißmuffe beschränkt ist. Vielmehr umfaßt die erfindungsgemäße Kombination auch andere Fittings, wie Sattelstücke, Anbohrarmaturen für Rohre ebenso wie flächenförmige Bauteile, beispielsweise Platten, oder dreidimensionale Bauteile, wie Behälter, Durchführungen in Wannen oder Behältern oder dergleichen. Derartige Fittinge, die gegebenfalls mit entsprechenden Bauteilen verbunden sind oder Bestandteile derselben sind, enthalten mit elektrischem Strom bzw. elektrischer Spannung beaufschlagbare Heizelemente aus Widerstandsdraht, beispielsweise in Form der erläuterten Heizwendel oder einer Heizwicklung. Des Weiteren können derartige Heizelemente oder die elektrischen Drähte oder Leiter auf der zu verschweißenden Oberfläche des Bauteils aufgebracht sein und insbesondere aus elektrisch leitfähigem Material aufgedampft sein oder als Metallgitter oder als elektrisch leitende Kohlestoffasern oder aus elektrisch leitfähigem Kunststoff oder Polymer gebildet sein. Die Zuführung der Schweißenergie mittels des Heizelements kann ferner durch elektrische Widerstandsheizung ebenso erfolgen wie durch Anwendung der Induktions- oder Mikrowellentechnologie.

## Patentansprüche

1. Schweißftting mit einem Schweißindikator, wobei das Schweißfitting einen Fittingkörper (24) aus schweißbarem Kunststoff sowie ein Heizelement (28) zur Herstellung einer Schweißverbindung mit einem Bauteil aus Kunststoff enthält, wobei der Schweißindikator insbesondere in einer Ausnehmung (22) im Bereich einer Außenfläche (30) des Fittingkörpers (24) angeordnet ist und eine Hülse (2) mit zusätzlichem Material (6) enthält, welches bei Erreichen einer vorgegebenen Temperatur eine wesentliche Volumenexpansion erfährt, welche nach außen zur Anzeige gebracht wird, wobei
die Hülse (2) eine erste Kammer (4) mit einer Austrittsöffnung aufweist, das zusätzliche Material (6) in der ersten Kammer (4) der Hülse (2) angeordnet und mittels eines Verschlussstopfens (10) festgelegt ist, der während des Schweißens, vor oder bei Erreichen der vorgegebenen Temperatur, aufgelöst wird oder gelöst wird.

2. Schweißfitting nach Anspruch 1, **dadurch gekennzeichnet, dass** die Hülse (2) eine Verjüngung (8) mit im Vergleich zu der ersten Kammer (4) reduzierter Querschnittsfläche aufweist, in die der Verschlussstopfen (10) ragt und an die sich ein Steigrohr (12) mit einer Breite entsprechend der ersten Kammer (4) anschließt.

3. Schweißfitting nach Anspruch 1 oder 2, **dadurch gekennzeichnet, dass** die vorgegebene Temperatur zumindest näherungsweise gleich groß wie oder größer als die Schmelztemperatur des Kunststoffes des Fittingkörpers (24) ist.

4. Schweißfitting nach einem der Ansprüche 1 bis 3, **dadurch gekennzeichnet, dass** die Volumenexpansion um einen vorgegebenen Betrag größer ist als die Volumenänderung des Kunststoffes bei Erreichen der vorgegebenen Temperatur, wobei der genannte Betrag bevorzugt wenigstens 1,2 beträgt.

5. Schweißfitting nach Anspruch 4, **dadurch gekennzeichnet, dass** der genannte Betrag wenigstens 1,5 beträgt.

6. Schweißfitting nach einem der Ansprüche 1 bis 4, **dadurch gekennzeichnet, dass** der Schweißindikator in die Ausnehmung (22) des Fittingkörpers (24) derart eingesetzt ist, dass vor dem Schweißen das zusätzliche Material (6) einen vorgegebenen Abstand (38) zum Heizelement (28) aufweist,

7. Schweißfitting nach Anspruch 1, **dadurch gekennzeichnet, dass** die Öffnung (42) der Hülse (2) zur Außenfläche (30) des Fittingkörpers (24) gerichtet ist,

8. Schweißfitting nach Anspruch 1 bis 7, **dadurch gekennzeichnet, dass** der Verschlussstopfen (10) eine andere Farbe aufweist als das zusätzliche Material (6).

9. Schweißfitting nach Anspruch 8, **dadurch gekennzeichnet, dass** der Verschlussstopfen (10) nach der Volumenänderung des zusätzlichen Materials eine andere Farbe als das zusätzliche Material (6) aufweist.

10. Schweißfitting nach einem der Ansprüche 1 bis 9, **dadurch gekennzeichnet, dass** das zusätzliche Material (6) bei der Volumenänderung einen Farbumschlag erfährt.

11. Schweißfitting mit einem Schweißindikator nach einem der Ansprüche 1 bis 10, **dadurch gekennzeichnet, dass** die Hülse (2) des Schweißindikators fest in der Ausnehmung (22) des Fittingkörpers (24) angeordnet ist.

12. Schweißfitting nach Anspruch 11, **dadurch gekennzeichnet, dass** die Hülse (2) in die Ausnehmung (22) gepresst ist.

13. Schweißfitting nach einem der Ansprüche 1 bis 12, **dadurch gekennzeichnet, dass** die Ausnehmung (22) gestuft mit einem inneren Teil (34) und einem oberen der Außenfläche (30) zugewandten äußeren Teil (36) ausgebildet ist.

14. Schweißfitting nach Anspruch 13, **dadurch gekennzeichnet, dass** die Hülse (2) in dem inneren Teil (34), welcher einen geringeren Durchmesser als der äußere Teil (36) der Ausnehmung (22) aufweist, verankert ist.

15. Schweißfitting nach Anspruch 1, **dadurch gekennzeichnet, dass** die die Kammer (4) mit dem zusätzlichen Material (6) enthaltende Hülse (2) derart in die Ausnehmung (22) des Fittingkörpers (24) eingesetzt ist, dass die Öffnung (42) der Hülse (2) in einem vorgegebenen Abstand (44) zur Außenfläche (30) des Fittingkörpers (24) angeordnet ist, wobei zunächst die Öffnung (42) mit dem Verschlussstopfen (10) verschlossen ist und nach der Volumenexpansion das zusätzliche Material sich teilweise in dem zwischen der Öffnung (42) der Hülse (2) und der Außenfläche (30) liegenden Teil der Ausnehmung (22) befindet.

## Claims

1. A weld fitting with a weld indicator, wherein the weld fitting comprises a fitting body (24) of weldable plastic as well as a heating element (28) for the production of a welded connection with a plastic component, wherein in particular, the weld indicator is arranged in a recess (22) in the region of an external surface (30) of the fitting body (24) and comprises a shell (2) having additional material (6) which, on reaching a given temperature, undergoes a substantial expansion in volume and which is moved outside as an indicator, wherein the shell (2) exhibits a first chamber (4) with an outlet, the additional material (6) is arranged in the first chamber (4) of the shell (2) and is localized by means of a plug (10) which disintegrates or dissolves during welding prior to or on reaching the given temperature.

2. A weld fitting according to claim 1, **characterized in that** the shell (2) has a constriction (8) with a reduced cross sectional area compared with the first chamber (4), into which the plug (10) projects and which is adjacent to a riser tube (12) with a width which corresponds to that of the first chamber (4).

3. A weld fitting according to claim 1 or claim 2, **characterized in that** the given temperature is at least approximately equal to or higher than the melting temperature of the plastic of the fitting body (24).

4. A weld fitting according to one of claims 1 to 3, **characterized in that** the expansion in volume is greater than the volume change of the plastic on reaching the given temperature by a given amount, wherein said amount is preferably at least 1.2.

5. A weld fitting according to claim 4, **characterized in that** said amount is at least 1.5.

6. A weld fitting according to one of claims 1 to 4, **characterized in that** the weld indicator is inserted into the recess (22) of the fitting body (24) in such a manner that prior to welding, the additional material (6) is at a given distance (38) from the heating element (28).

7. A weld fitting according to claim 1, **characterized in that** the opening (42) of the shell (2) is orientated towards the external surface (30) of the fitting body (24).

8. A weld fitting according to claims 1 to 7, **characterized in that** the colour of the plug (10) is different from that of the additional material (6).

9. A weld fitting according to claim 8, **characterized in that** following the volume change of the additional material, the colour of the plug (10) is different from that of the additional material (6).

10. A weld fitting according to one of claims 1 to 9, **characterized in that** the additional material (6) undergoes a colour change when it changes volume.

11. A weld fitting having a weld indicator according to one of claims 1 to 10, **characterized in that** the shell (2) of the weld indicator is fixed in the recess (22) of the fitting body (24).

12. A weld fitting according to claim 11, **characterized in that** the shell (2) is pushed into the recess (22).

13. A weld fitting according to one of claims 1 to 12, **characterized in that** the recess (22) is formed in a stepped manner with an inner portion (34) and an upper outer portion (36) facing the external surface (30).

14. A weld fitting according to claim 13, **characterized in that** the shell (2) is anchored in the inner portion (34) which has a smaller diameter than the outer portion (36) of the recess (22).

15. A weld fitting according to claim 1, **characterized in that** the shell (2) comprising the chamber (4) with the additional material (6) is inserted into the recess (22) of the fitting body (24) in such a manner that the opening (42) of the shell (2) is arranged at a given distance (44) from the external surface (30) of the fitting body (24) such that initially, the opening (42) is sealed with the plug (10) and after the volume expansion, part of the additional material is located in the portion of the recess (22) situated between the opening (42) of the shell (2) and the external surface (30).

## Revendications

1. Raccord soudé comprenant un indicateur de soudage, ledit raccord soudé comprenant un corps de raccord (24) en matière plastique soudable ainsi qu'un élément chauffant (28) pour l'élaboration d'un joint soudé avec un élément de construction en matière plastique, dans lequel l'indicateur de soudage est disposé en particulier dans un évidement (22) au niveau d'une surface extérieure (30) du corps de raccord (24) et comprend une douille (2) avec de la matière supplémentaire (6) qui subit une expansion de volume substantielle lorsqu'une température spécifiée est atteinte qui est affichée à l'extérieur,
dans lequel la douille (2) présente une première chambre (4) avec une ouverture de sortie, la matière supplémentaire (6) est disposée dans la première chambre (4) de la douille (2) et bloquée au moyen d'un bouchon de fermeture (10) qui est dissous ou défait en cours de soudage, avant que la température spécifiée ne soit atteinte, ou lorsque celle-ci est atteinte.

2. Raccord soudé selon la revendication 1, **caractérisé en ce que** la douille (2) présente une conicité (8) avec une superficie de section réduite par rapport à la première chambre (4) dans laquelle dépasse le bouchon de fermeture (10) et qui est suivie d'un tuyau montant (12) d'une largeur correspondant à la première chambre (4).

3. Raccord soudé selon la revendication 1 ou 2, **caractérisé en ce que** la température spécifiée est au moins approximativement égale ou supérieure à la température de fusion de la matière plastique du corps de raccord (24).

4. Raccord soudé selon l'une quelconque des revendications 1 à 3, **caractérisé en ce que** l'expansion de volume est supérieure d'une quantité spécifiée au changement de volume de la matière plastique lorsque la température spécifiée est atteinte, ladite quantité étant de préférence au moins égale à 1,2.

5. Raccord soudé selon la revendication 4, **caractérisé en ce que** ladite quantité est au moins égale à 1,5.

6. Raccord soudé selon l'une quelconque des revendications 1 à 4, **caractérisé en ce que** l'indicateur de soudage est mis en place dans l'évidement (22) du corps de raccord (24) de telle sorte qu'avant le soudage, la matière supplémentaire (6) présente une distance spécifiée (38) par rapport à l'élément chauffant (28),

7. Raccord soudé selon la revendication 1, **caractérisé en ce que** l'ouverture (42) de la douille (2) est orientée vers la surface extérieure (30) du corps de raccord (24).

8. Raccord soudé selon la revendication 1 à 7, **caractérisé en ce que** le bouchon de fermeture (10) présente une autre couleur que la matière supplémentaire (6).

9. Raccord soudé selon la revendication 8, **caractérisé en ce que** le bouchon de fermeture (10) présente après le changement de volume de la matière supplémentaire une autre couleur que la matière supplémentaire (6).

10. Raccord soudé selon l'une quelconque des revendications 1 à 9, **caractérisé en ce que** la matière supplémentaire (6) change de teinte lors du changement de volume.

11. Raccord soudé avec un indicateur de soudage selon l'une quelconque des revendications 1 à 10, **caractérisé en ce que** la douille (2) de l'indicateur de soudage est fixée dans l'évidement (22) du corps de raccord (24).

12. Raccord soudé selon la revendication 11, **caractérisé en ce que** la douille (2) est enfoncée dans l'évidement (22).

13. Raccord soudé selon l'une quelconque des revendications 1 à 12, **caractérisé en ce que** l'évidement (22) est réalisé de façon étagée avec une partie intérieure (34) et une partie supérieure (36) tournée vers la surface extérieure (30).

14. Raccord soudé selon la revendication 13, **caractérisé en ce que** la douille (2) est ancrée dans la partie intérieure (34) qui présente un diamètre inférieur à la partie extérieure (36) de l'évidement (22).

15. Raccord soudé selon la revendication 1, **caractérisé en ce que** la douille (2) comprenant la chambre (4) avec la matière supplémentaire (6) est mise en place dans l'évidement (22) du corps de raccord (24) de telle sorte que l'ouverture (42) de la douille (2) est disposée à une distance spécifiée (44) par rapport à la surface extérieure (30) du corps de raccord (24), dans lequel on ferme d'abord l'ouverture (42) avec le bouchon de fermeture (10), et après l'expansion de volume, la matière supplémentaire se trouve en partie dans la partie de l'évidement (22) située entre l'ouverture (42) de la douille (2) et la surface extérieure (30).
